# EUROPEAN PATENT APPLICATION

(11) **EP 2 503 557 A2**
(43) Date of publication of application: **26.09.2012**
(21) Application number: 12158551.7
(22) Date of filing: 08.03.2012
(51) Int. Cl.: G21C 11/00, G21C 19/18

(54) **Nuclear installation**

(30) Priority: 25.03.2011 GB 201105030
(71) Applicant: Rolls-Royce plc, London SW1E 6AT (GB)
(72) Inventor: Robertson, Daniel, Derby, Derbyshire DE3 9AJ (GB)
(74) Representative: Roberts, Nicholas John

(57) **Abstract**

A nuclear installation 10 comprises a cavity 22 which is defined by at least one cavity wall 20 and which is arranged to contain nuclear fuel and a liquid for shielding radiation emitted from the fuel. A barrier 30 is arranged to be deployed within the cavity 22 to define a sub-region 34 within the cavity 20 within which fuel can be contained or transported so as to keep the fuel away from the at least one cavity wall 22 by a predetermined distance. The invention also concerns a method for refuelling a reactor vessel 18.

## Description

The invention relates to a nuclear installation having a cavity arranged to contain nuclear fuel. Particularly, although not exclusively, the invention relates to a nuclear reactor installation having a refuelling cavity and a method for refuelling a nuclear reactor vessel.

A number of different types of nuclear reactor exist that can be used to generate power, such as electrical power, for example. One known type of nuclear reactor is a water-cooled nuclear reactor. The two main types of water-cooled nuclear reactor are the pressurised water reactor (PWR) and the boiling water reactor (BWR).

Water-cooled nuclear reactors comprise nuclear reactor equipment including a reactor pressure vessel (RPV) and a reactor coolant circuit for circulating water through the reactor pressure vessel. The reactor pressure vessel contains the nuclear fuel and comprises a reactor head which can be removed in order to allow access to the interior of the reactor pressure vessel. The nuclear reactor equipment is housed within a containment structure, such as a domed-roof building.

The reactor is typically refuelled every 18-24 months by replacing or repositioning fuel within the reactor pressure vessel. Before refuelling the reactor, the plant is switched off, allowed to cool down and is then depressurised. Where necessary, the water in the coolant circuit is drained to a level below the reactor head.

The reactor head is then manually unbolted and removed by specialist equipment and a refuelling cavity above the reactor pressure vessel is filled with water. Some of the spent fuel may then be removed from the reactor pressure vessel and replaced with fresh fuel, and some of the partially-used fuel may be repositioned within the reactor pressure vessel. This refuelling process is carried out underwater using remote handling equipment.

The water in the refuelling cavity provides gamma shielding from the gamma radiation emitted from the nuclear fuel. The water also acts to cool the spent fuel which will emit a significant amount of thermal energy. The European Utilities Requirements (EUR) specify that there must be 4 metres of water above the nuclear fuel in the refuelling cavity at all times. The walls of the refuelling cavity are typically constructed from reinforced concrete and form part of a concrete structure that provides support to the main nuclear reactor equipment including the reactor pressure vessel.

During normal refuelling the fuel is handled away from the walls of the refuelling cavity. The concrete walls and the water between the fuel and the walls of the refuelling cavity provide gamma shielding. However, if the fuel is accidentally dropped close to the wall of the refuelling cavity the water will provide little, if any, gamma shielding. Accordingly, the concrete walls of the refuelling cavity must be made relatively thick, in the region of 1-2 metres, in order to ensure that the walls provide sufficient gamma shielding on their own. Therefore, a large amount of concrete must be used to build the nuclear reactor which results in a particularly heavy structure.

In some circumstances it may be desirable to build part, or all, of the nuclear reactor off-site in a factory and transport it to site. This can be difficult due to the weight of the nuclear reactor, in particular, the weight of the concrete structure. Further, it may be desirable to reduce the amount of building materials required to construct a nuclear reactor.

According to an aspect of the invention there is provided a nuclear installation, comprising a cavity, defined by at least one cavity wall, arranged to contain nuclear fuel and a liquid for shielding radiation emitted from the fuel; and a barrier arranged to be deployed within the cavity to define a sub-region within the cavity within which fuel can be contained or transported so as to keep the fuel away from the at least one cavity wall by a predetermined distance. The predetermined distance may be a distance such that water, or other liquid, in a gap between the barrier and the cavity wall provides sufficient gamma shielding from gamma radiation emitted from the fuel. The predetermined distance may be greater than 0.1 metres, greater than 1 metre or greater than 3 metres, for example. The predetermined distance may be less that 10 metres, less than 5 metres or less than 3 metres, for example. The predetermined distance may be between 1-4 metres or between 2-3 metres, for example.

At least some of the cavity walls may have a thickness of less than 1 metre, or less than 0.5 metre, or less that 0.1 metre. At least some of the cavity walls may be between 0.01 and 0.1 metre, for example. The cavity walls may comprise concrete.

The or each cavity wall may be substantially vertical.

he cavity may be defined by a plurality of cavity walls and the barrier may be arranged to be deployed in such a position that fuel being contained or transported within the sub-region is kept a pre-determined distance away from each cavity wall.

The cavity may comprise a cavity base and the barrier may comprise a barrier base that is arranged to be deployed above the cavity base in such a position that fuel being contained or transported within the sub-region is kept a pre-determined distance away from the cavity base by the barrier base. The predetermined distance may be greater than 0.1 metres, greater than 1 metre or greater than 3 metres, for example. The predetermined distance may be less that 10 metres, less than 5 metres or less than 3 metres, for example. The predetermined distance may be between 1-4 metres or between 2-3 metres, for example.

The barrier may be permeable. The barrier may comprise mesh or may have at least one opening. If the barrier is permeable water can flow into and out of the sub-region. In other embodiments, it may be desirable that the barrier is non-permeable.

The barrier may be located within the cavity, or within a structure that forms part of the cavity, and may be moveable between at least a resting configuration and a deployed configuration. The structure may be a concrete structure. In the resting position the barrier may be located within the base of the cavity, or adjacent to the base or the walls of the cavity. There may be provided an actuator for moving the barrier between at least a resting configuration and a deployed configuration. All or some of the actuators may be hydraulic actuators, mechanical jacks or screw threads.

The barrier may be moveable between a position outside of the cavity to a deployed position within the cavity. For example, during normal operation the barrier may be located on the base of a containment structure within which the cavity is located, and in order to move the barrier to the deployed position it may be lifted and moved to a location within the cavity.

The installation may further comprise fuel transport apparatus for transporting fuel within the sub-region. The fuel transport apparatus may be coupled to the barrier. The fuel transport apparatus may be coupled to the barrier such that the fuel transport apparatus can only transport fuel within the cavity when the barrier is deployed. Such an arrangement may prevent fuel being transported (and potentially coming into contact with the refuelling cavity walls) before the barrier is deployed.

The cavity may be a spent fuel cavity for containing spent nuclear fuel. The barrier may be moveable within the cavity so as to change the pre-determined distance which the barrier keeps the fuel away from the at least one cavity wall.

The cavity may be a reactor refuelling cavity which is arranged to contain a liquid during refuelling and which is defined by at least one refuelling cavity wall. The installation may further comprise a reactor vessel arranged to contain nuclear fuel and having an access opening that opens into the reactor refuelling cavity; and the barrier may be arranged to be deployed within the refuelling cavity during refuelling to define a transportation region within the refuelling cavity within which fuel can be transported from and/or to the reactor vessel through the access opening; and the barrier may be arranged to be deployed in such a position that fuel being transported within the transportation region is kept a pre-determined distance away from the at least one refuelling cavity wall by the barrier.

The access opening may open, or may at least partly open, into the transportation region.

A removable reactor head may be provided for closing the access opening of the reactor vessel.

The structure may be a reinforced concrete structure.

There may be a fuel conduit that opens into the refuelling cavity and leads to a spent fuel store. The spent fuel store may be located in, or supported by, a structure that also forms the refuelling cavity. The spent fuel store may be located in a separate building.

The installation may further comprise at least one fuel opening that opens into the transportation region through which fuel can enter and/or exit the refuelling cavity. The installation may further comprise a spent fuel store having a fuel opening that opens into the transportation region.

The nuclear installation may be transportable by vehicle. This would allow the installation to be manufactured off-site in a factory and subsequently transported to site for installation. The nuclear installation may comprise a containment structure within which the cavity and the reactor vessel, where present, is located. The containment structure may comprise a domed-roof and may comprise a cylindrical outer wall and a base. The containment structure may be reinforced concrete or steel, for example.

The nuclear installation may be a water-cooled nuclear reactor installation. The nuclear installation may comprise at least part of a coolant circuit that passes through a reactor vessel.

The invention also concerns a nuclear plant comprising a nuclear installation in accordance with any statement herein.

According to another aspect of the invention there is provided a nuclear reactor installation, comprising: a reactor refuelling cavity which is arranged to contain a liquid during refuelling and which is defined by at least one refuelling cavity wall; a reactor vessel arranged to contain nuclear fuel and having an access opening that opens into the reactor refuelling cavity; and a barrier arranged to be deployed within the refuelling cavity during refuelling to define a transportation region within the refuelling cavity within which fuel can be transported from and/or to the reactor vessel through the access opening; wherein the barrier is arranged to be deployed in such a position that fuel being transported within the transportation region is kept a pre-determined distance away from the at least one refuelling cavity wall by the barrier.

According a further aspect of the invention there is provided a method of refuelling a reactor vessel of a nuclear reactor, comprising: filling a reactor refuelling cavity, which is defined by at least one refuelling cavity wall, with a liquid; deploying a barrier within the refuelling cavity, thereby defining a transportation region within the refuelling cavity; and transporting fuel from and/or to the reactor vessel within the transportation region through an access opening that opens into the refuelling cavity; wherein the barrier is deployed in such a position that fuel being transported within the transportation region is kept a pre-determined distance away from the at least one refuelling cavity wall by the barrier. It should be appreciated by one skilled in the art that the order of the method steps presented above is non-limiting. For example, the barrier may be deployed before the refuelling cavity is filled with liquid.

The refuelling cavity may comprise a cavity base and the barrier may comprise a barrier base that may be deployed above the cavity base in such a position that fuel being transported within the transportation region is kept a pre-determined distance away from the cavity base by the barrier base.

The method may further comprise transporting fuel within the transportation region from the reactor vessel to a spent fuel store.

The barrier may be located within the refuelling cavity or within a structure that forms the refuelling cavity and deploying the barrier may comprise moving the barrier from a resting configuration to a deployed configuration.

Deploying the barrier may comprise moving the barrier from a position outside of the refuelling cavity to a deployed position within the refuelling cavity.

The fuel may be transported within the transportation region by fuel transport apparatus.

The invention may comprise any combination of the features and/or limitations referred to herein, except combinations of such features as are mutually exclusive.

Embodiments of the invention will now be described, by way of example only, with reference to the accompanying drawings, in which:
Figure 1 schematically shows a plan view of a nuclear reactor installation according to a first embodiment;
Figure 2 schematically shows the nuclear reactor installation of Figure 1 with the barrier in the deployed position;
Figure 3 schematically shows a cross-sectional view of the nuclear reactor installation of Figure 1;
Figure 4 schematically shows a plan view of a nuclear reactor installation according to a second embodiment;
Figure 5 schematically shows a plan view of a nuclear reactor installation according to a third embodiment;
Figure 6 schematically shows a cross-sectional view of a nuclear reactor installation according to a fourth embodiment.

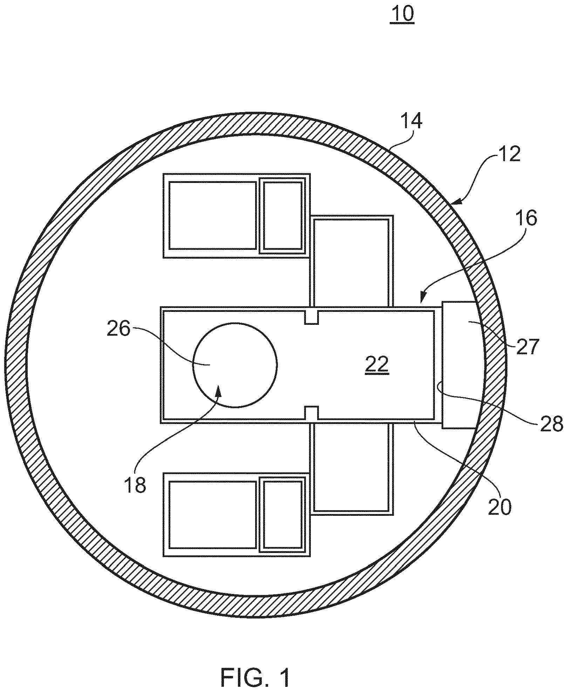

Figure 1 shows a nuclear reactor installation which in this embodiment is a transportable nuclear reactor module 10. The reactor module 10 comprises a containment structure 12 which may be in the form of a domed-roof building have a generally cylindrical outer wall 14. In this embodiment the containment structure is made from reinforced concrete. However, in other embodiments the containment structure may be steel, for example.

A reinforced concrete structure 16 is housed within the containment structure 12 and supports nuclear reactor equipment. The nuclear reactor equipment supported by the concrete structure 16 includes a nuclear reactor pressure vessel 18, a steam generator, a pressuriser, an accumulator, monitoring sensors and control circuitry. At least part of a coolant circuit for circulating coolant through the reactor vessel 18 is also provided within the concrete structure. The concrete structure 16 may be manufactured in a factory off-site and then transported to site for installation, or may be constructed in-situ.

The reinforced concrete structure 16 comprises a refuelling cavity wall 20 which defines a refuelling cavity 22. The refuelling cavity wall 20 is relatively thin-walled and may be in the region of 0.02 metres. It should be appreciated that the refuelling cavity wall 20 may be made from any other suitable material such as steel, for example.

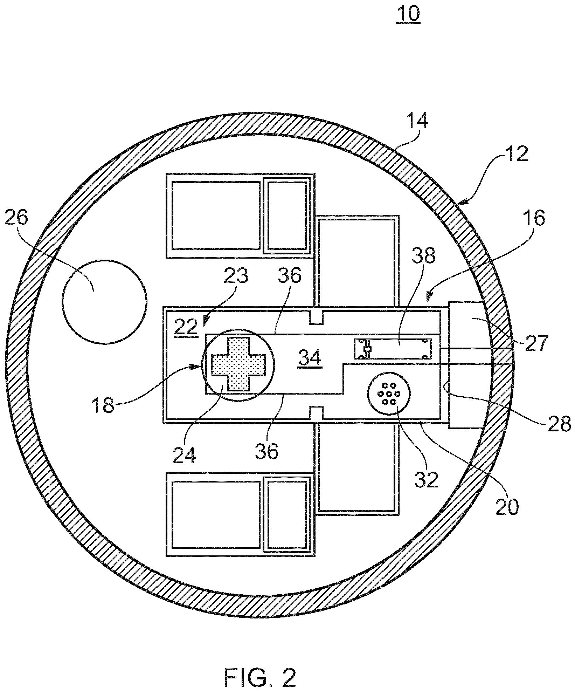

The reactor pressure vessel 18 is arranged to contain nuclear fuel, in the form of fuel rods, and reactor internals, including control rods. The coolant circuit (not shown) passes through the reactor pressure vessel 18 so that in use water can be circulated through the reactor pressure vessel 18. The reactor pressure vessel 18 has an access opening 24 (Figure 2) that provides access to the interior of the reactor pressure vessel 18 so that the reactor internals can be removed and the fuel can be replaced or repositioned. During use, the access opening 24 is closed and sealed with a reactor head 26 which is bolted to the pressure vessel 18.

In this embodiment, the concrete structure 16 also comprises a fuel conduit 27 having a fuel opening 28 that opens into the refuelling cavity 22. The fuel conduit 27 is connected to another building (not shown) in which used fuel can be safely stored for an extended period of time.

With reference to Figure 2, in order to refuel the reactor vessel 18 the plant is switched off, allowed to cool and the coolant circuit is depressurised. The reactor head 26 is manually removed by an operator by unbolting it from the reactor vessel 18. The reactor head 26 is then moved to a position outside of the refuelling cavity 22. The interior of the refuelling cavity 22 is dimensioned such that an operator and the necessary machinery can gain access to the reactor head 26 so that it can be unbolted. Thus, the refuelling cavity 22 may have an internal dimension in the region of 7 metres. Once the reactor head 26 has been removed, the refuelling cavity 22 is filled with water of the same composition and quality of that contained in the coolant circuit. The refuelling cavity 22 is filled to a level such that at the fuels highest point, the water provides sufficient gamma shielding from gamma radiation emitted from the fuel. The water level may be at least 4 metres above the highest point of the fuel during refuelling. The water also fills the fuel conduit 27. After the refuelling cavity 22 has been filled with water, the reactor internals 32 are removed from the reactor vessel 18 and moved to a position within the refuelling cavity 22.

A barrier 30 is then deployed within the refuelling cavity 22 and defines a transportation region 34 which is a sub-region of the refuelling cavity 22. The barrier 30 comprises a plurality of substantially vertical side walls 36 that vertically extend from the base of the refuelling cavity to above the level of the water in the refuelling cavity. The barrier 30 is deployed in such a position that the access opening 24 opens into the transportation region 34 defined by the barrier 30. Further, the barrier 30 is deployed such that it extends into the fuel conduit 27 through the fuel opening 28. In this embodiment, at least some of the side walls 36 of the barrier 30 are permeable so that water can flow in and out of the transportation region 34. For example, the barrier 30 may comprise mesh side walls or side walls having one or more small openings therein.

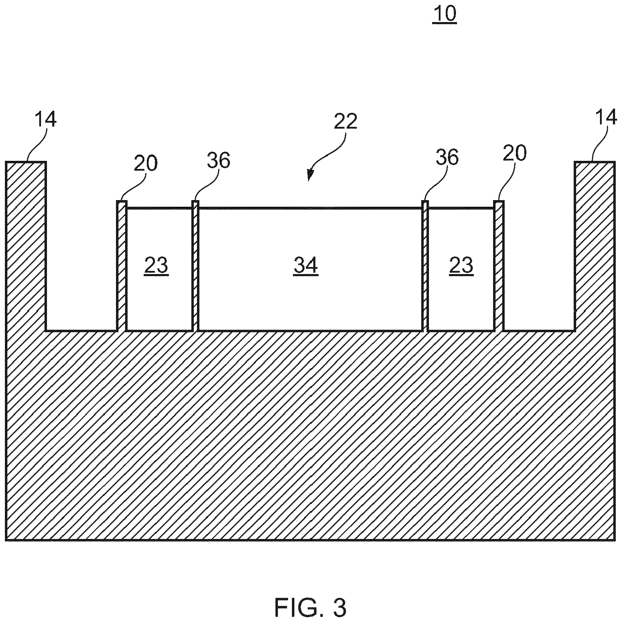

As shown in Figure 3, the barrier 30 is deployed such that the side walls 36 of the barrier 30 are laterally spaced from the walls 20 of the refuelling cavity 22. In this embodiment, the walls 36 of the barrier 30 are also spaced from the internal wall(s) of the fuel conduit 27. The spacing between the side walls 36 of the barrier 30 and the walls of the refuelling cavity 22 ensure that there is a water-filled gap 23 between the transportation region 34 and the outside of the refuelling cavity 22. The water-filled gap 23 may in the region of 2.4 metres.

In this embodiment the barrier 30 is permanently located within the concrete structure 16 and is moveable between a resting position (Figure 1) and a deployed position (Figure 2). As can be seen from Figure 1, in the resting position the barrier 30 is not deployed and does not partition the refuelling cavity 22 into a transportation region 34. As can be seen from Figure 2, in the deployed position the barrier 30 is deployed within the refuelling cavity 22 and partitions the refuelling cavity 22 into a transportation region 34.

In the resting position of the barrier 30 (Figure 1) the barrier 30 may be located within the base of the concrete structure 16 and may be vertically extended out of the base in order to move it to the deployed position (Figure 2). Alternatively, in the resting position the side walls 36 of the barrier 30 may be adjacent to the walls of the refuelling cavity 22 and may be laterally moved in order to move the barrier 30 to the deployed position. An actuator or a plurality of actuators, such as hydraulic jacks, mechanical jacks or screw threads, for example, may be used to move the barrier 30 from the resting position to the deployed position.

In other embodiments the barrier 30 may normally be located outside of the concrete structure 16 and may be moved to a deployed position within the refuelling cavity 22 after the reactor head 26 has been removed. For example, the barrier 30 may normally be located on the floor of the containment structure 12 and may be moved by lifting apparatus, such as a crane, to the deployed position within the refuelling cavity.

After the barrier 30 has been deployed within the refuelling cavity 22 the reactor vessel 18 can be refuelled by removing spent fuel rods from the interior of the vessel 18 and replacing them with new fuel rods, and/or by repositioning fuel rods within the reactor vessel 22. The fuel rods are transported underwater within the transportation region 34 defined by the barrier 30 by remote handling fuel transport apparatus 38. The fuel transport apparatus 38 may comprise a crane for moving fuel rods laterally and vertically and a turnover rig for rotating fuel rods through 90°. Spent fuel rods can be removed from the reactor vessel 18 through the access opening 24, to a spent fuel store located within another building through the fuel conduit 27. Similarly, new fuel rods can be introduced into the reactor refuelling cavity 22 through the fuel conduit 27 and transported to the reactor vessel 18 within the transportation region 34.

In this embodiment the remote handling fuel transport apparatus 38 is interlocked with the barrier 30 so that fuel cannot be transported without the barrier being deployed. This prevents fuel being accidentally deposited alongside the thin walls 20 of the refuelling cavity 22.

The fuel rods, both spent and new, are transported within the transportation region 34 of the refuelling cavity 22 defined by the barrier 30. Whilst the barrier 30 may be permeable so as to allow the passage of water into and out of the transportation region 34, the fuel rods are unable to pass through the barrier 30. Therefore, the barrier 30 ensures that the fuel rods are retained within the transportation region 34. The barrier 30 therefore keeps the fuel rods a predetermined distance away from the walls of the refuelling cavity 22 (the distance between the barrier 30 and the walls 20 of the refuelling cavity 22). Since the refuelling cavity 22 (including the transportation region 34) is filled with water, there is always a water-filled gap 23 between the fuel rods and the walls 20 of the refuelling cavity 22. The water-filled gap 23 therefore provides gamma shielding from the gamma radiation emitted from fuel rods within the transportation region 34 to an operator on the outside of the refuelling cavity.

The provision of a water-filled gap 23 between the fuel and the walls 20 of the refuelling cavity 22 allows the use of thinner, and therefore lighter, walls 20 whilst still providing the necessary gamma shielding. If a worker is standing directly outside of the refuelling cavity 22, and a fuel rod is positioned within the transportation region 34 adjacent to the barrier 30, the worker is shielded from gamma radiation by the width of the water-filled gap 23 and the thickness of the wall 20. In this embodiment the walls 20 of the refuelling cavity 22 are relatively thin and therefore provide little gamma shielding. However, the water-filled gap 23 is of a width such that the water provides the necessary gamma shielding to the worker from the gamma radiation emitted from the fuel. It will be appreciated that the walls 20 may provide some gamma shielding, therefore allowing the water-filled gap 23 to be smaller.

After the reactor vessel 18 has been refuelled, the barrier 30 is removed or moved to a resting position, the water in the refuelling cavity 22 is drained and the reactor head 26 is bolted to the reactor vessel 18. The coolant circuit is then pressurised and the nuclear reactor is turned on.

The use of a deployable barrier 30 forming a transportation region 34 and a water-filled gap 23 between the barrier 30 and the walls 20 of the refuelling cavity 22 may allow the overall size of the refuelling cavity to be smaller. This is clearly advantageous, especially if it is desirable or necessary to transport the nuclear reactor module 10.

In previously considered arrangements where there is no deployable barrier and the gamma shielding is provided entirely by the walls 20 of the refuelling cavity 22, the walls 20 may be in the region of 1.2 metres thick. In order to allow access to the inside of the refuelling cavity 22 so that the reactor head 26 can be removed, the internal width of the refuelling cavity 22 may be in the region of 6 metres. Therefore, the total external width of the refuelling cavity 22 may be in the region of 8.4 metres.

In at least some embodiments of the invention, the refuelling cavity walls 20 can be reduced to a thickness of 0.02 metres which is sufficient to support the water in the refuelling cavity. The internal width of the barrier 30 may be in the region of 2.4 metres which is sufficient to allow fuel to be transported within it. The width of the walls 36 of the barrier 30 may be in the region of 0.01 metres. The distance between the walls 36 of the barrier 30 and the walls 20 of the refuelling cavity 22 may be in the region of 2.4 metres which ensures that when this region is filled with water it provides sufficient gamma shielding. Therefore, the total external width of the refuelling cavity 22 by using a deployable barrier 30 may be in the region of 7.26 metres.

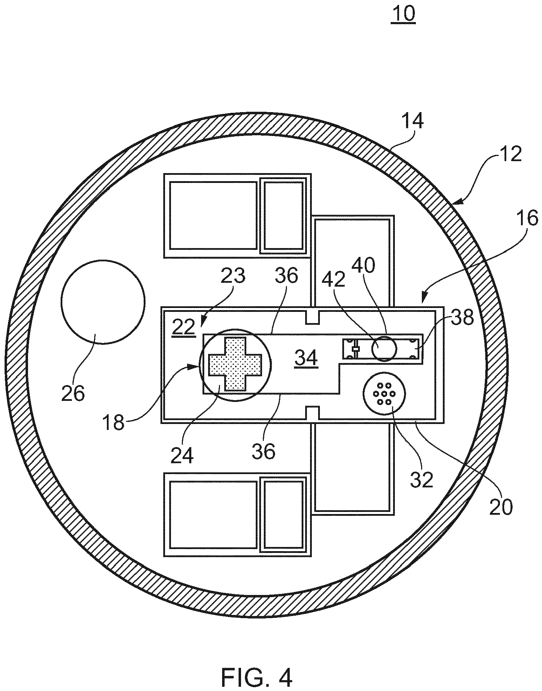

A second embodiment is shown in Figure 4 which is similar to the first embodiment illustrated in Figures 1-3. The main difference is that there is no fuel conduit 27 that leads to a separate building in which spent fuel can be stored. Instead, a spent fuel store 40 is provided in the concrete structure 16 and has a fuel opening 42 that opens into the refuelling cavity 22. When the barrier 30 is deployed it defines a transportation region 34, defined by the side walls 36 of the barrier, which the access opening 24 and the fuel opening 42 opens into. Spent fuel can be removed from the reactor vessel 18 through the access opening 24 and can be transported underwater within the transportation region 34 to the spent fuel store 40. As in the first embodiment, the barrier 30 keeps the fuel away from the walls 20 of the refuelling cavity 22 and therefore the water-filled gap 23 between the barrier 30 and the walls 20 of the refuelling cavity 22 provides gamma shielding. This allows the walls 20 of the refuelling cavity to be relatively thin.

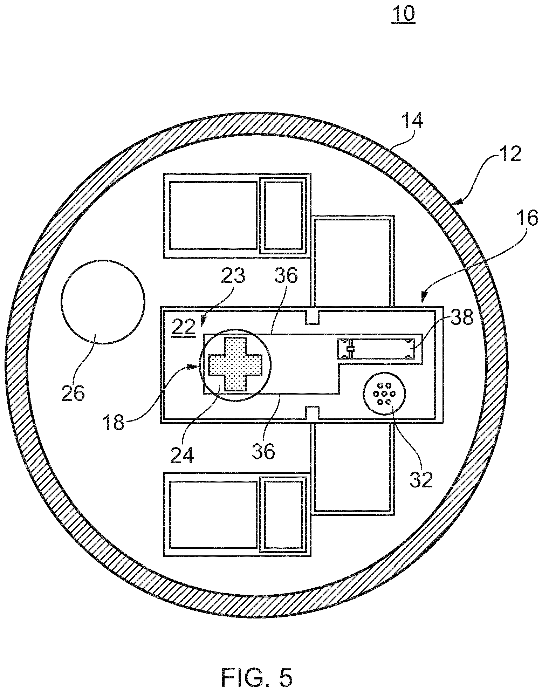

A third embodiment is shown in Figure 5 which is similar to the second embodiment of Figure 4. However, there is no spent fuel store provided in the concrete structure. Instead, spent fuel is removed by remote handling techniques from the top of the refuelling cavity. When the barrier 30 is deployed within the refuelling cavity 22, as for the first and second embodiments, it defines a transportation region 34 within which fuel can be transported. As for the first and second embodiments, the barrier 30 keeps the fuel being transported within the transportation region 34 a predetermined distance away from the walls 20 of the refuelling cavity 22. Therefore, the walls 20 can be relatively thin as the water-filled gap 23 between the barrier 30 and the refuelling cavity walls 20 provides gamma shielding.

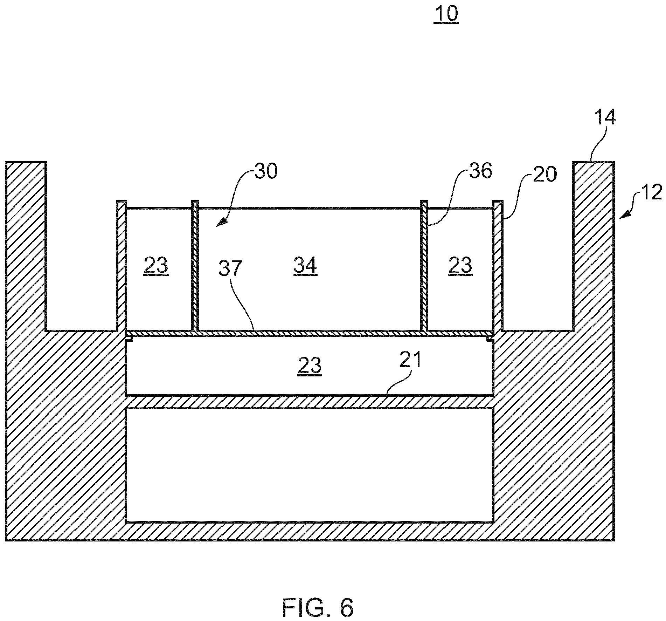

Figure 6 shows a fourth embodiment of a nuclear reactor module 10 which is similar to the other embodiments previously described. The refuelling cavity 22 comprises refuelling cavity walls 20 and a refuelling cavity base 21. The deployable barrier 30 comprises substantially vertical side walls 36 and a substantially horizontal base 37. When the reactor vessel 18 is to be refuelled, the reactor head 26 is removed and the refuelling cavity 22 is filled with water. The barrier 30 is then deployed within the refuelling cavity 22 in such a position that the barrier side walls 36 are spaced from the walls 20 of the cavity 22 and the barrier base 37 is spaced from the refuelling cavity base 21. Thus, the barrier 30 defines water-filled gaps 23 between the barrier side walls 36 and the walls 20 of the refuelling cavity 22, and between the barrier base 37 and the cavity base 21. These water-filled gaps 23 provide gamma shielding from gamma radiation emitted from nuclear fuel transported within a transportation region 34 defined within the interior of the barrier 30. In order to refuel the reactor vessel 18, nuclear fuel rods are transported underwater within the transportation region 34 by remote handing fuel transport apparatus 38. As in the other embodiments, the fuel is unable to pass through the barrier 30 and therefore cannot come into contact with the walls 20 or base 21 of the refuelling cavity 22. Therefore, there is always a water-filled gap 23 between the walls 20 and base 21 of the cavity 22 which provide gamma shielding. It should be noted that the barrier 30 of this embodiment may be used in conjunction with any of the other embodiments.

Although it has been described that the reactor head is removed, the reactor cavity is filled with water and then the barrier is deployed, it should be appreciated that these steps can be carried out in any order. For example, the barrier may be deployed before the refuelling cavity is filled with water.

Further, although it has been described that the cavity is a reactor refuelling cavity, the invention is equally applicable to other cavities within which nuclear fuel may be contained or transported. For example, the cavity may be a spent fuel store cavity having relatively this walls with a barrier arranged to be deployed within the cavity so as to keep nuclear fuel a predetermined distance away from the walls of the spent fuel store. Water contained within the spent fuel store cavity between the barrier and the wall(s) would thus provide radiation shielding.

## Claims

1. A nuclear installation (10), comprising:
a cavity (22), defined by at least one cavity wall (20), arranged to contain nuclear fuel and a liquid for shielding radiation emitted from the fuel; and
a barrier (30) arranged to be deployed within the cavity (22) to define a sub-region (34) within the cavity (22) within which fuel can be contained or transported so as to keep the fuel away from the at least one cavity wall (20) by a predetermined distance.

2. A nuclear installation according to claim 1, wherein the cavity (22) is defined by a plurality of cavity walls (20) and wherein the barrier (30) is arranged to be deployed in such a position that fuel being contained or transported within the sub-region (34) is kept a pre-determined distance away from each cavity wall (20), and wherein the cavity may comprise a cavity base (21) and wherein the barrier (30) comprises a barrier base (37) that is arranged to be deployed above the cavity base (21) in such a position that fuel being contained or transported within the sub-region (34) is kept a pre-determined distance away from the cavity base (21) by the barrier base (37).

3. A nuclear installation according to any preceding claim, wherein the barrier (30) is permeable.

4. A nuclear installation according to any preceding claim, wherein the barrier (30) is located within the cavity (22) and is moveable between at least a resting configuration and a deployed configuration, and the nuclear installation may further comprise an actuator for moving the barrier (30) between at least a resting configuration and a deployed configuration.

5. A nuclear installation according to any preceding claim, wherein the barrier (30) is moveable between a position outside of the cavity (22) to a deployed position within the cavity (22).

6. A nuclear installation according to any preceding claim, further comprising fuel transport apparatus (38) for transporting fuel within the sub-region (34), wherein the fuel transport apparatus (38) may be coupled to the barrier (30), and may be coupled to the barrier (30) such that the fuel transport apparatus (38) can only transport fuel within the cavity (22) when the barrier (30) is deployed.

7. A nuclear installation according to any preceding claim, wherein the cavity (22) is a spent fuel cavity for containing spent nuclear fuel, and wherein the barrier (30) may be moveable within the cavity (22) so as to change the pre-determined distance which the barrier (30) keeps the fuel away from the at least one cavity wall (20).

8. A nuclear installation according to any preceding claim, wherein the cavity (22) is a reactor refuelling cavity which is arranged to contain a liquid during refuelling and which is defined by at least one refuelling cavity wall (20);
the installation (10) further comprising:
a reactor vessel (18) arranged to contain nuclear fuel and having an access opening (24) that opens into the reactor refuelling cavity (22); and
wherein the barrier (30) arranged to be deployed within the refuelling cavity (22) during refuelling to define a transportation region (34) within the refuelling cavity (22) within which fuel can be transported from and/or to the reactor vessel (18) through the access opening (24); and
wherein the barrier (30) is arranged to be deployed in such a position that fuel being transported within the transportation region (34) is kept a pre-determined distance away from the at least one refuelling cavity wall (20) by the barrier (30).

9. A nuclear installation according to claim 8, wherein the access opening (24) opens into the transportation region (34).

10. A nuclear installation according to claim 8 or 9, further comprising at least one fuel opening (28) that opens into the transportation region (34) through which fuel can enter and/or exit the refuelling cavity (22), and wherein the nuclear installation (10) may further comprise a spent fuel store (40) having a fuel opening (28) that opens into the transportation region (34).

11. A method of refuelling a reactor vessel (18) of a nuclear reactor (10), comprising:
filling a reactor refuelling cavity (22), which is defined by at least one refuelling cavity wall (20), with a liquid;
deploying a barrier (30) within the refuelling cavity (22), thereby defining a transportation region (34) within the refuelling cavity (22); and
transporting fuel from and/or to the reactor vessel (18) within the transportation region (34) and through an access opening (24) that opens into the refuelling cavity (22);
wherein the barrier (30) is deployed in such a position that fuel being transported within the transportation region (34) is kept a pre-determined distance away from the at least one refuelling cavity wall (20) by the barrier (30).

12. A method of refuelling a reactor vessel (18) according to claim 11, wherein the refuelling cavity (22) comprises a cavity base (21) and wherein the barrier (30) comprises a barrier base (37) that is deployed above the cavity base (21) in such a position that fuel being transported within the transportation region (34) is kept a pre-determined distance away from the cavity base (21) by the barrier base (37).

13. A method of refuelling a reactor vessel according to claim 11 or 12, further comprising transporting fuel within the transportation region (34) from the reactor vessel (18) to a spent fuel store (40).

14. A method of refuelling a reactor vessel according to any of claims 11-13, wherein the barrier (30) is located within the refuelling cavity (22) and wherein deploying the barrier (30) comprises moving the barrier (30) from a resting configuration to a deployed configuration, and deploying the barrier (30) may comprise moving the barrier (30) from a position outside of the refuelling cavity (22) to a deployed position within the refuelling cavity (22).

15. A method of refuelling a reactor vessel according to any of claims 11-14, wherein the fuel is transported within the transportation region (34) by fuel transport apparatus (38).
